# EUROPEAN PATENT APPLICATION

(11) **EP 0 814 470 A2**
(43) Date of publication of application: **29.12.1997**
(21) Application number: 97109404.0
(22) Date of filing: 10.06.1997
(51) Int. Cl.: G11B 7/24, G11B 7/26

(54) **Optical disk and process for producing the same**

(30) Priority: 19.06.1996 JP 158206/96
(71) Applicant: Kao Corporation, Chuo-Ku Tokyo 103 (JP)
(72) Inventor: Uchida, Satoki, c/o Kao Corp., Ichikai-machi, Haga-gun, Tochigi-ken (JP); Akao, Takashi, c/o Kao Corp., Ichikai-machi, Haga-gun, Tochigi-ken (JP); Taniguchi, Masahiro, c/o Kao Corp., Ichikai-machi, Haga-gun, Tochigi-ken (JP); Kobayashi, Shinichi, c/o Kao Corp., Ichikai-machi, Haga-gun, Tochigi-ken (JP)
(74) Representative: Grünecker, Kinkeldey, Stockmair & Schwanhäusser Anwaltssozietät

(57) **Abstract**

An optical disk includes a pair of disk substrates, each having a groove corresponding to a stamper holder, and an adhesive layer interposed between the disk substrates. At least one of the disk substrates has a recording surface and a reflective layer covering the recording surface. At least one of the disk substrates has, at the circumference of the groove, a blocking layer for preventing the adhesive from oozing out into the groove when the disk substrates are adhered to each other via the adhesive to form a single disk.

## Description

### BACKGROUND OF THE INVENTION

### Field of the Invention:

The present invention relates to an optical disk comprising a pair of disk substrates adhered to each other to form a single disk and particularly to an optical disk of intimately adhered type.

### Description of the Related Art:

In recent years, as a compact and super-capacity recording medium for recording character, sound and image information, there has been proposed an optical disk in which a pair of disk substrates are adhered to each other via an adhesive to form a single disk, and at least one disk substrate has, on the adhering surface side, a recording surface and a reflective layer covering the recording surface.

In the manufacture of the optical disks of this type, concerns are drawn to the technique for the adhesion of a pair of disk substrates. The techniques so far proposed include (i) a spin coating method comprising applying a photo-curable adhesive onto the surface of one of the substrates, putting the other substrate thereon, spinning the two substrates at a prescribed speed to remove an excess amount of the adhesive, and curing the adhesive; and (ii) a pressing method comprising applying a photo-curable adhesive onto the surface of one of the substrates, pressing the other substrate thereonto under a prescribed pressure, followed by curing the adhesive.

In either adhesion method, concerns are drawn to uniformity of coating thickness of the adhesive for thickness precision of the optical disks in order to prevent reading errors, and to prevention of an excess amount of an adhesive from oozing out from the inner and outer peripheries of the optical disks in order to reduce the cost and to give a fine appearance. In particular, prevention of the adhesive from oozing out from the inner and outer peripheries is also important from the viewpoint of securing satisfactory clamping (chucking) on a disk drive and prevention of rotation fluctuations of the disk drive.

Conventional techniques for preventing an excess amount of an adhesive from oozing out include a method in which an annular projection is provided on the substrate on the inside of the recording area at the time of molding so that the adhesive flow may be halted (see Japanese Patent Laid-Open No. 231436/87), a method in which a projection or a depression is provided on the inside of the recording area of each disk substrate at the time of molding so that the projection and the depression mate with each other so as to halt adhesive flow (see Japanese Patent Laid-open No. 232436/87), a method in which an annular groove is provided on the substrate on the outside of the recording area so that any excess amount of an adhesive may be held in the groove (see Japanese Patent Laid-Open No. 298730/88), and a method in which an annular groove is provided on both the inner peripheral portion and the outer peripheral portion of the substrate (in between which is the recording area), and an adhesive is applied or a sheet adhesive is inserted between the two grooves for adhering the disk substrates (see Japanese Patent Laid-Open No. 35739/89).

However, according to these conventional adhesion techniques, due to the positional restriction of the recording area, the projections or depressions must be provided inside the groove which is a trace of a stamper holder (a holder which holds the stamper in the course of the production of the disk substrate) and is inevitably formed on the disk substrate in the course of the production thereof (hereinafter referred to as "groove corresponding to a stamper holder" or simply as "groove"). Therefore, the adhesive enters the groove while entrapping air bubbles. The entrapped air causes deformation of the optical disk due to thermal expansion upon photo curing of the adhesive, which produces an unfavorable appearance, or results in use of an excess amount of the adhesive. Where a groove as a reservoir of an adhesive is formed to prevent the adhesive from oozing out, air is also entrained in the groove together with the adhesive, which results in thermal deformation upon photo curing, waste of the adhesive, and impairment of the appearance.

### SUMMARY OF THE INVENTION

It is therefore an object of the present invention to provide an optical disk and a process for producing the same, in which an excess amount of an adhesive can securely be prevented from oozing out, deformation of the disk caused by thermal expansion upon photo curing of the adhesive can be prevented, and the appearance of the optical disk is improved.

The present invention accomplishes the above and other objects by providing an optical disk comprising:
a pair of disk substrates, each having a groove corresponding to a stamper holder, and an adhesive layer comprising an adhesive and being interposed between the disk substrates to unite two disk substrates, at least one of the disk substrates having a recording surface and a reflective layer which covers the recording surface,
   wherein at least one of the disk substrates has, at the circumference of the groove, a blocking layer for preventing the adhesive from oozing out into the groove when the disk substrates are adhered to each other via the adhesive to form the disk.

The present invention also provides the optical disk, wherein the blocking layer is a printed layer formed by printing.

The present invention further provides the optical disk, including a plurality of the blocking layers wherein the adhesive layer is provided between the blocking layers.

The present invention furthermore provides the optical disk, wherein the printed layer is formed by screen printing.

The present invention furthermost provides the optical disk, including a protective layer for protecting the reflective layer and provided on the reflective layer, wherein the blocking layer is provided on the protective layer.

The present invention additionally provides the optical disk, wherein the blocking layer is formed of an adhesive.

The present invention provides a process for producing an optical disk comprising a pair of disk substrates, each having a groove corresponding to a stamper holder, and an adhesive layer comprising an adhesive interposed between the disk substrates to unite the disk substrates into a single disk, at least one of the disk substrates having a recording surface and a reflective layer which covers the recording surface, the process comprising the steps of:
forming, at the circumference of the groove of at least one of the disk substrates, a blocking layer for preventing the adhesive from oozing out into the groove,
applying the adhesive at the circumference of the blocking layer, and
adhering the disk substrates to each other via the adhesive.

The present invention further provides the process for producing an optical disk, wherein the disk substrates are adhered and pressed onto each other to spread the adhesive between the disk substrates.

The present invention furthermore provides the process for producing an optical disk, wherein the disk substrates are adhered to each other and subjected to high speed spinning to spread the adhesive between the disk substrates.

According to the optical disk and the process for producing an optical disk of the present invention, an excess amount of an adhesive can securely be prevented from oozing out, deformation of the disk caused by thermal expansion upon photo curing of the adhesive can be prevented, and the appearance of the optical disk is improved.

### BRIEF DESCRIPTION OF THE DRAWINGS

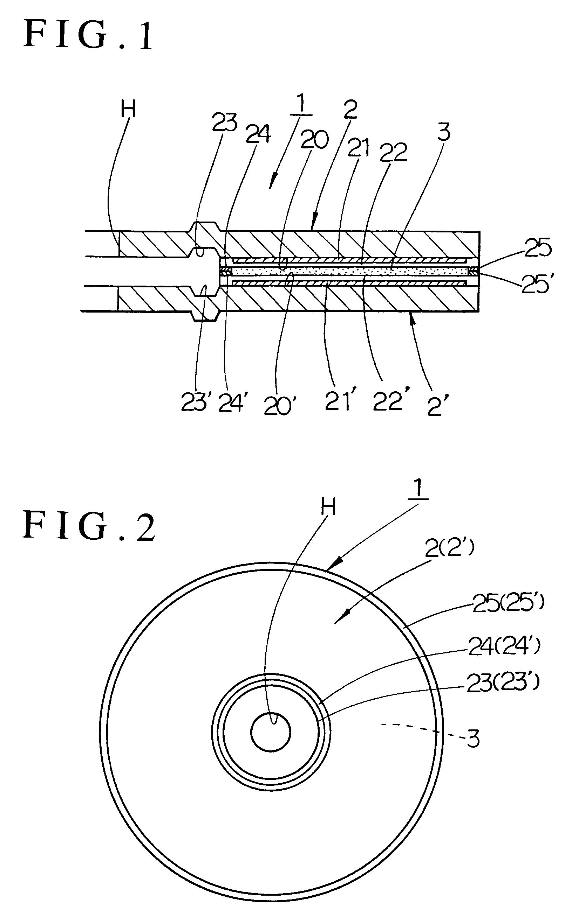

Fig. 1 is a partial cross sectional view showing an embodiment of the optical disk of the present invention.

Fig. 2 is a plan view of the optical disk of the same embodiment.

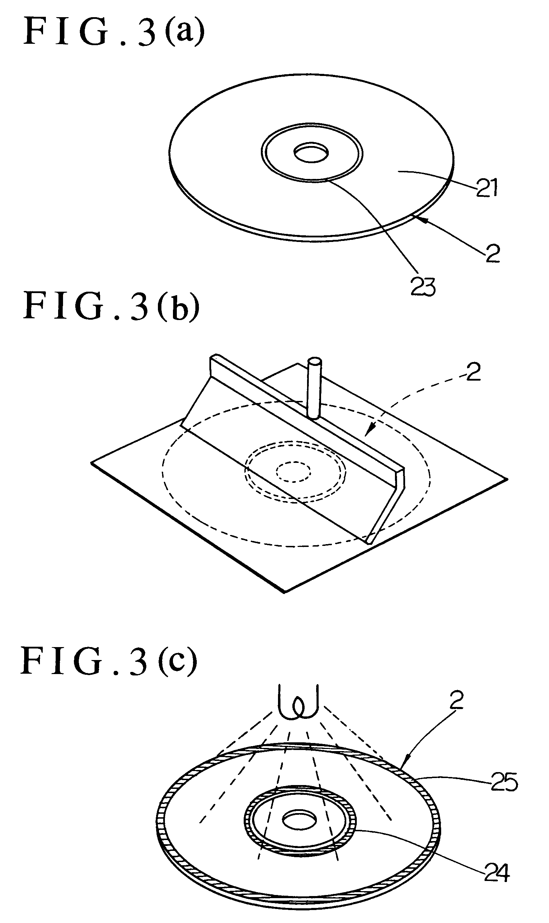

Figs. 3(a) to (c) are views schematically illustrating an embodiment of the process for producing the optical disk according to the present invention; Fig. 3(a) is a perspective view of a disk substrate before a printed layer is formed; Fig. 3(b) is a perspective view showing the manner that screen printing is being conducted with a screen coater; and Fig. 3(c) is a perspective view showing the manner that the adhesive is being cured by irradiating ultraviolet light.

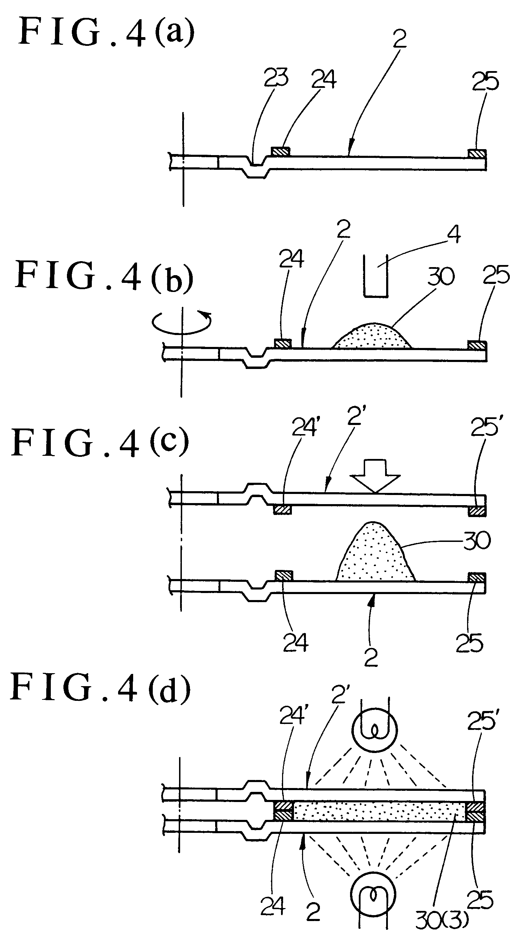

Figs. 4(a) to (d) are views schematically depicting an embodiment of the process for producing the optical disk according to the present invention; Fig. 4(a) is a partial cross sectional view of one of the two disk substrates on which two printed layers have been formed; Fig. 4(b) is a partial cross sectional view showing the condition that an adhesive is being applied on the disk substrate; Fig. 4(c) is a partial cross sectional view showing the condition that one disk substrate is being placed on the other disk substrate; and Fig. 4(d) is a partial cross sectional view showing the condition that the adhesive is being cured by irradiating ultraviolet light.

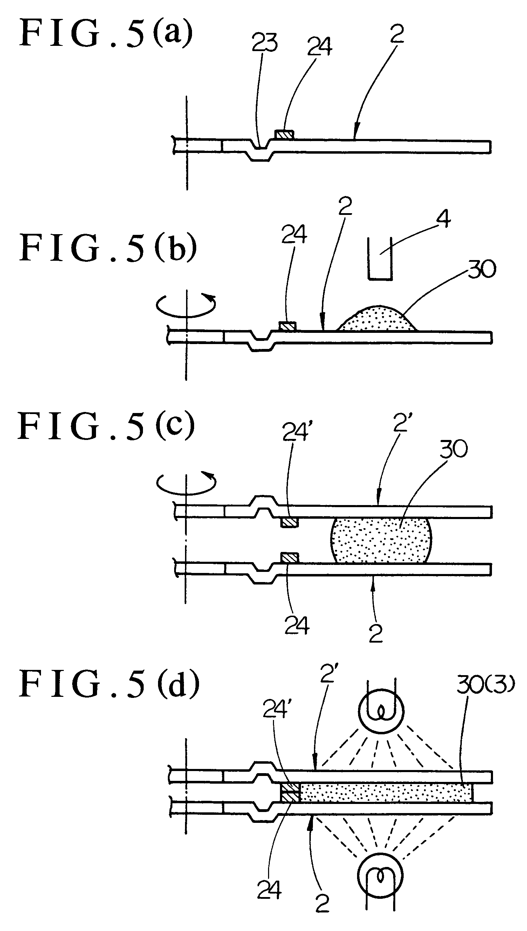

Fig. 5 (a) to (d) are views schematically depicting another embodiment of the process for producing an optical disk according to the present invention; Fig. 5(a) is a partial cross sectional view of one of the two disk substrates on which a printed layer has been formed; Fig. 5(b) is a partial cross sectional view showing the condition that an adhesive is being applied on the disk substrate; Fig. 5(c) is a partial cross sectional view showing the condition that one disk substrate is overlaid with the other disk substrate; and Fig. 5(d) is a partial cross sectional view showing the condition that the adhesive is being cured by irradiating ultraviolet light.

### DETAILED DESCRIPTION OF THE INVENTION

The present invention will be illustrated in detail with reference to the accompanying drawings.

Figs. 1 and 2 show an embodiment of the optical disk of the present invention. In the figures, reference numeral 1 indicates an optical disk, and H indicates a center hole.

As shown in Figs. 1 and 2, the optical disk 1 is formed such that a pair of disk substrates 2, 2' , which have, on the side of the adhering surface, a recording surfaces 20, 20' and reflective layers 21, 21' covering the respective recording surfaces, are adhered to each other via an adhesive layer 3, thereby forming a single disk.

On the reflective layers 21, 21' are formed protective layers 22, 22' for protecting the respective reflective layers 21, 21'. Annular printed layers 24, 24' serving as a blocking layer for preventing the adhesive from oozing out are provided on the protective layers 22, 22' at the circumference of grooves 23, 23' corresponding to a stamper holder. In this optical disk 1, printed layers 25, 25', which also serve as a blocking layer are provided at the peripheral area of the disk substrates 2, 2', respectively, concentrically with the printed layers 24, 24'.

In the optical disk of the present invention, each of the disk substrates 2, 2' is integrally molded from a synthetic resin material by using a metal master disk as a mold. The synthetic resin material mainly includes polycarbonate (PC).

The optical disks according to the present invention include not only those in which a pair of disk substrates 2, 2' each having a recording layer on the side of the adhering surface are adhered to each other, like the optical disk 1, but those in which one of the disk substrates has a recording surface while the other disk substrate has no recording surface (i.e. a dummy disk).

The protective layers 22, 22' are formed by coating a synthetic resin material such as an acrylic resin on the reflective layers 21, 21'. The protective layer is not an essential element, but is desirable for surely preventing the damage to the recording surfaces 20, 20' and the reflective layers 21, 21' in the course of adhering.

In the optical disk of the present invention, the blocking layer to be formed on the side of the adhering surface of the disk substrate can be formed on any of the protective layer, the reflective layer or the disk substrate itself, so long as its position is at the circumference of the groove corresponding to a stamper holder of at least one of the disk substrates. From the viewpoint of adhesion strength between the disk substrates, the blocking layer is preferably formed on the protective layer which is formed at the circumference of the groove corresponding to a stamper holder and above the non-recording area of the disk substrate.

The thickness of the blocking layer (the thickness of each of the printed layers 24, 24' of the optical disk 1 shown in Fig. 1) is preferably 20 to 35 µm, particularly 25 to 27.5 µm, from the viewpoint that the thickness of the printing layers 24, 24' formed on the disk substrates need to be half of the standard thickness of the adhesive layer 3, which is 55 ± 15 µm. In this case, the two respective blocking layers (printed layers) may have the same or different thicknesses.

The width of the blocking layer is preferably 1.0 to 1.5 mm at the inner peripheral printing layers 24, 24' shown in Fig. 1, and preferably 0.5 to 1.0 mm at the outer peripheral printed layers 25, 25' which will be described later, from the viewpoint of adhesion strength and fine appearance. In this case, the two blocking layers (printed layers) may have the same or different widths.

The printed layers 24, 24' may be colorless or colored and transparent or opaque after the adhesive is cured but are preferably colorless and transparent for convenience of signal detection.

The method for forming the printed layers 24, 24' is not particularly limited as long as the printed layer can have the above-described configuration so as to prevent the adhesive 3 from oozing out. Examples of printing methods include screen printing, gravure printing, and gravure offset printing. It is preferred to form the printed layers by screen printing from the standpoint of cost of equipment and the materials.

The material used for the printed layers 24, 24' is not particularly limited as long as it can form the printed layers to provide the above-described configuration. For example, an adhesive can be used. The adhesive, which may be either transparent or opaque and be either colorless or colored, is preferably an adhesive used in an adhesive layer which will be described later in detail.

In the optical disk of the present invention, the printed layers 24, 24' may be provided on both of the two disk substrates 2, 2' as in the optical disk 1 shown in Fig. 1, or alternatively, either one of the disk substrates 2, 2' may have the printed layer.

While the optical disk of the present invention preferably has printed layers 25, 25' at the peripheral portion of the disk substrates 2, 2', respectively, as in the optical disk 1, these printed layers 25, 25' may not be formed in the case where the adhesive layer 3 is formed by spin coating because an excess amount of an adhesive is removed from the periphery of the disk by spin coating, as hereinafter described. The printed layers 25, 25' can be formed on any of the protective layer, the reflective layer or the disk substrate itself, as long as the printed layers are located at the peripheral portion of the disk substrates and on at least one of the adhering surface sides. From the viewpoint of adhesion strength between the disk substrates, the printed layer is preferably formed on the protective layer which is formed above the non-recording area peripheral to the recording area of the disk substrate.

It is preferable that the dimensions (thickness and width), material, and method of formation of the printed layers 25, 25' formed at the peripheral portion of the disk substrates 2, 2' be the same as those of the above-mentioned printed layers 24, 24' formed at the circumference of the groove 23 or 23' corresponding to a stamper holder.

The adhesive layer 3 is formed in such a manner that an adhesive is applied to the outer area of the printed layers 24, 24' formed on the disk substrates 2, 2', and subsequently the disk substrates 2, 2' are adhered to each other.

The adhesive used for the adhesive layer 3 is not particularly limited as long as the disk substrates 2, 2' can be firmly adhered to each other, and may be transparent or opaque and colorless or colored after it has cured. Adhesives having such characteristics include cationic and radical photo-curable adhesives, with radical photo-curable adhesives being preferred.

In the case where the applied adhesive is to be spread upon being pressed down, the adhesive to be used preferably has a viscosity of 500 to 1500 cP, more preferably 700 to 1000 cP.

In the case where the applied adhesive is to be spread by spin coating, the adhesive to be used preferably has a viscosity of 400 to 1500 cP, more preferably 500 to 1500 cP.

Preferred embodiments of the process for producing an optical disk according to the present invention will be explained by referring to Figs. 1 through 5. Since the process for producing an optical disk of the present invention includes a pressing method and a spin coating method including the step or steps of applying an adhesive for the adhesion of two disk substrates, the explanation will be given with respect to these methods respectively.

### 1) Pressing Method:

A pair of disk substrates 2, 2' are prepared in conformity to the standards of the optical disk. The reflective layers 21, 21' are formed thereon so as to cover the recording surfaces 20, 20' of the respective disk substrate. See Fig. 1 and Fig. 3(a). In Fig. 3, only one of the disk substrates 2 is shown.

Then, an adhesive is printed on at least one (both, in the particular case of Fig. 1) of the disk substrates 2 and 2' having formed thereon the reflective layers 21 and 21', respectively, at the circumference of the groove 23, 23' corresponding to a stamper holder and at the periphery of the disk. While printing can be carried out by screen printing, gravure printing, gravure offset printing, etc., screen printing is preferred from the standpoint of both initial cost and material costs as stated above (see Fig. 3(b)).

The thus printed adhesive is cured by irradiating ultraviolet light of prescribed wavelength for a prescribed time to form the annular printed layers 24, 24', 25 and 25' (See Fig. 3(c) and Fig. 4(a). Only one of the disk substrates is shown in Figs. 4(a) and (b)).

A prescribed amount of an adhesive 30 is fed from a nozzle 4 at the circumference (outer area) of the printed layer 24 while rotating the disk substrate 2 at a prescribed speed as shown in Fig. 4(b). The speed of rotation of the disk substrate is preferably 60 rpm or less, still preferably 20 rpm or less. If it exceeds 60 rpm, the adhesive tends to be spread outward, which may cause formation of air bubbles upon adhesion of the disks.

When an adhesive having a viscosity of 700 to 1000 cP is used, it is preferably fed at a total amount of 0.3 to 0.4 g at a rate of about 0.1 to 0.2 g/sec. Further, the adhesive is preferably fed in the form of a single ring usually having an inner diameter of 8 cm.

The other disk substrate 2' is placed above the disk substrate 2 with its printed layers 24' and 25' facing down and brought down as shown in Fig. 4(c), whereby the adhesive 30 applied between the printed layers 24 and 25 is spread between the printed layers 24, 24' and the printed layers 25, 25'.

Both sides of the thus obtained disk substrates are irradiated with ultraviolet light using a light source, such as a metal halide lamp or a high-pressure mercury lamp, for an irradiation time designed to give a prescribed cumulative light quantity depending on the light selected and the adhesive used. The adhesive 30 spread between the printed layers 24, 24' and the printed layers 25, 25' is thereby cured to secure the adhesion of the disk substrates 2, 2' (see Fig. 4(d)).

### 2) Spin Coating Method:

The steps of formation of disk substrates using spin coating are mostly the same as those described in the pressing method, provided that the printed layer is formed only at the circumference of the groove 23 corresponding to a stamper holder (i.e., printed layer 24) (see Fig. 5a(a)).

A prescribed amount of an adhesive 30 is fed from a nozzle 4 at the circumference of the printed layer 24 while rotating the disk substrate 2 at a prescribed speed. The speed of rotation of the disk substrate is preferably 60 rpm or less, still preferably 20 rpm or less. If it exceeds 60 rpm, the adhesive tends to be spread outward, which may cause formation of air bubbles upon adhesion of the disks.

When an adhesive having a viscosity of 500 to 1500 cP is used, it is preferably fed at a total amount of 3 to 4 g at a rate of 1 to 2 g/sec. Further, the adhesive is preferably fed in the form of a single ring usually having an inner diameter of 4 cm.

The other disk substrate 2' is placed above the disk substrate 2 with its printed layer 24' facing down and brought into contact with the disk substrate 2. The two disk substrates are then subjected to high speed spinning at a prescribed speed of rotation thereby uniformly spreading the adhesive 30 applied at the circumference (outer area) of the printed layer 24 (see Fig. 5(c)). The speed of rotation of the disk substrates is preferably 3000 to 4000 rpm. If it is less than 3000 rpm, the adhesive layer tends to become non-uniform, suffering air bubbles. If it exceeds 4000 rpm, the adhesive layer has an unfavorable reduced thickness.

One or both sides of the thus obtained disk substrates is/are irradiated with ultraviolet light using a light source, such as a metal halide lamp or a high-pressure mercury lamp, for an irradiation time designed to give a prescribed cumulative light quantity depending on the light source and the adhesive used. The adhesive 30 spread over the circumference (outer area) of the printed layers 24, 24' is thereby cured to secure the adhesion of the disk substrates 2, 2' (see Fig. 4(d)).

The optical disk according to the present invention and the process for producing the same according to the present invention can be applied with no particular restriction to any optical disk formed of a pair of disk substrates, at least one of which has formed thereon a recording surface and a reflective layer covering the recording surface, the two disk substrates being adhered to each other with an adhesive layer. The optical disk and the process for producing the same are particularly suitable for conforming to the standards of optical disks such as SD-5, SD-10, SD-9, SD-18, or DVD-4.7G, DVD-4.9G, DVD-8.5G, etc.

The present invention will now be illustrated more specifically with reference to Examples, but it should be understood that the present invention is not limited thereto.

### EXAMPLE 1

### SD-10 (blocking layers printed on both substrates, substrates adhered to each other by pressing, protective layers formed):

A pair of polycarbonate disk substrates having a diameter of 120 mm were molded in conformity to the standard SD-10 (double-sided reading, capacity: 9.4 GB). Aluminum was deposited on the recording surface of each substrate by vacuum evaporation to form a reflective layer. Each of the substrates having the reflective layer was set on a spin coater, and a protective layer was formed to cover the reflective layer.

An adhesive (95A14X produced by Sony Chemical Co., Ltd.) was printed on the protective layer of each disk substrate at the circumference of the groove corresponding to a stamper holder by means of a screen printer (#300 screen). The printed adhesive was cured by ultraviolet irradiation for 2 seconds by means of a metal halide lamp to form an annular printed layer (blocking layer) having a thickness of 25 µm, a width of 0.7 mm, and an inner diameter of 39 mm. In the same manner, an annular printed layer (blocking layer) having a thickness of 25 µm, a width of 0.7 mm, and an inner diameter of 118 mm was formed at the peripheral portion of each disk substrate.

One of the disk substrates having the printed layer formed thereon was set on a spin coater with its printed side up, and an adhesive having a viscosity of 750 cP was fed onto the area between the two annular printed layers at a rate of 0.13 g/sec while rotating the disk substrate at a speed of 20 rpm to apply 0.4 g in total of the adhesive in the form of a ring having an inner diameter of about 8 cm.

The other disk substrate was pressed onto the disk substrate placed on the spin coater with its printed side down, thereby spreading the applied adhesive between the inner and outer printed layers.

The upper and lower sides of the thus obtained disk substrates were irradiated with ultraviolet light emitted from a metal halide lamp for 15 seconds to cure the adhesive spread between the inner and outer printed layers and the two disk substrates were adhered to each other.

### EXAMPLE 2

### SD-10 (blocking layers printed on both substrates, substrates adhered to each other by spin coating, protective layers formed):

A pair of polycarbonate disk substrates having a diameter of 120 mm were molded in conformity to the standard SD-10 (double-sided reading, capacity: 9.4 GB). Aluminum was deposited on the recording surface of each substrate by vacuum evaporation to form a reflective layer. Each of the substrates having the reflective layer was set on a spin coater, and a protective layer was formed to cover the reflective layer.

An adhesive (95A14X produced by Sony Chemical Co., Ltd.) was printed on the protective layer of each disk substrate at the circumference of the groove corresponding to a stamper holder by means of a screen printer (#300 screen). The printed adhesive was cured by ultraviolet irradiation for 2 seconds by means of a metal halide lamp to form an annular printed layer (blocking layer) having a thickness of 25 µm, a width of 1 mm, and an inner diameter of 39 mm.

One of the disk substrates having formed thereon the printed layer was set on a spin coater with its printed side up, and an adhesive having a viscosity of 500 cP was fed onto the outer area of the annular printed layer at a rate of 1.3 g/sec while rotating the disk substrate at a speed of 20 rpm to apply 4 g in total of the adhesive in the form of a ring having an inner diameter of about 4 cm.

The other disk substrate was placed above the disk substrate placed on the spin coater with its printed layer down and brought into contact with the lower substrate. The two disk substrates were subjected to high speed spinning at a speed of 3000 to 4000 rpm, thereby to uniformly spread the adhesive applied to the outer area of the printed layer.

The upper and lower sides of the thus obtained two disk substrates were irradiated with ultraviolet light emitted from a metal halide lamp for 15 seconds to cure the adhesive spread in the outer area of the printed layer and the two disk substrates were adhered to each other.

### Evaluation:

The appearance of the optical disks prepared in Examples 1 and 2 was observed to examine whether or not the adhesive had oozed out.

It was confirmed that each optical disk had a fine appearance with no adhesive oozed out.

Obviously, numerous modifications and variations of the present invention are possible in light of the above teachings. It is therefore to be understood that within the scope of the appended claims, the invention may be practiced otherwise than as specifically described herein.

This application is based on Japanese Patent Application No. 8-158206, filed June 19, 1996, which is incorporated herein by reference.

## Claims

1. An optical disk comprising:
a pair of disk substrates, each having a groove corresponding to a stamper holder, and an adhesive layer comprising an adhesive and being interposed between said disk substrates to unite two disk substrates, at least one of said disk substrates having a recording surface and a reflective layer which covers said recording surface,
wherein at least one of said disk substrates has, at the circumference of said groove, a blocking layer for preventing said adhesive from oozing out into said groove when said disk substrates are adhered to each other via said adhesive to form the disk.

2. The optical disk according to claim 1, wherein said blocking layer is a printed layer formed by printing.

3. The optical disk according to claim 1, including a plurality of said blocking layers wherein said adhesive layer is provided between said blocking layers.

4. The optical disk according to claim 2, wherein said printed layer is formed by screen printing.

5. The optical disk according to claim 1, including a protective layer for protecting said reflective layer and provided on said reflective layer, wherein said blocking layer is provided on said protective layer.

6. The optical disk according to claim 1, wherein said blocking layer is formed of an adhesive.

7. A process for producing an optical disk comprising a pair of disk substrates, each having a groove corresponding to a stamper holder, and an adhesive layer comprising an adhesive interposed between said disk substrates to unite the disk substrates into a single disk, at least one of said disk substrates having a recording surface and a reflective layer which covers said recording surface, the process comprising the steps of:
forming, at the circumference of said groove of at least one of said disk substrates, a blocking layer for preventing said adhesive from oozing out into said groove,
applying said adhesive at the circumference of said blocking layer, and
adhering said disk substrates to each other via said adhesive.

8. The process according to claim 7, wherein said disk substrates are adhered and pressed onto each other to spread said adhesive between said disk substrates.

9. The process according to claim 7, wherein said disk substrates are adhered to each other and subjected to high speed spinning to spread said adhesive between said disk substrates.
